# FASCICULE DE BREVET EUROPEEN

(11) **EP 2 737 227 B1**
(45) Date de publication et mention de la délivrance du brevet: **12.02.2020**
(21) Numéro de dépôt: 12750431.4
(22) Date de dépôt: 20.07.2012
(51) Int. Cl.: F16D 65/12

(54) **FREIN A DISQUE POUR VEHICULE ET PROCEDE D'ASSEMBLAGE DE SES COMPOSANTS**
SCHEIBENBREMSE FÜR EIN FAHRZEUG SOWIE VERFAHREN ZUR MONTAGE IHRER KOMPONENTEN
DISC BRAKE FOR A VEHICLE AND METHOD FOR ASSEMBLING THE COMPONENTS THEREOF

(30) Priorité: 26.07.2011 FR 1156791
(43) Date de publication de la demande: 04.06.2014
(73) Titulaire: Saint Jean Industries, 69220 Saint-Jean d'Ardières (FR)
(72) Inventeur: BOUVIER, Véronique, F-69460 Saint Etienne Des Oullieres (FR); EPALE, Romain, F-69400 Villefranche Sur Saone (FR); BOCARD, Etienne, F-69220 Saint Jean D'ardieres (FR); VISEE, Richard, F-69600 Oullins (FR)
(74) Mandataire: Cabinet Laurent & Charras
(86) Numéro de dépôt international: PCT/FR2012/051724
(87) Numéro de publication internationale: WO 2013/014375

(56) Documents cités:
- EP-A1- 2 025 965
- EP-A2- 0 851 140
- FR-A1- 2 931 219
- US-A1- 2010 084 231

## Description

L'invention se rattache au secteur technique des freins à disque pour véhicules, et en particulier pour automobiles.

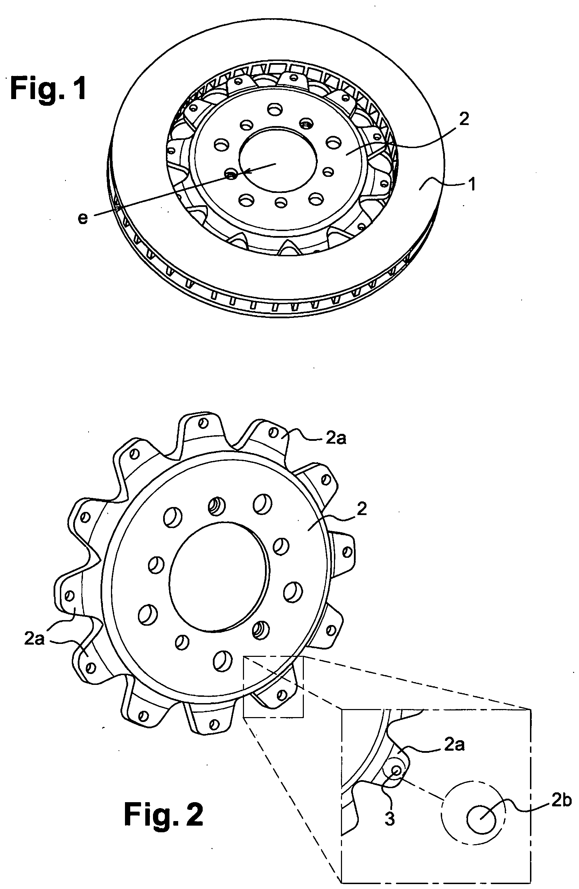

De manière bien courante, les freins à disque incluent deux composants principaux, à savoir une couronne (1) et un bol de frein (2) qui sont assemblés entre eux à l'aide de moyens de serrage de type vis. On a représenté figure 1 au titre de l'Art Antérieur un disque de frein monté en configuration connue, et à la figure 2, le bol de frein (2) qui s'assemble entre les flasques (1a-1b) de la couronne (1). Ce bol de frein (2) présente une pluralité de pattes (2a) qui sont toutes agencées avec un trou oblong (2b) pour permettre le passage de la vis de serrage (3). Ce montage permet la dilatation radiale de la couronne lors de l'échauffement et la montée en température du frein en situation normale de roulement du véhicule. Cette solution présente toutefois des contraintes avec une limitation du jeu de dilatation. Il existe également des disques de frein faits en une seule pièce.

D'autres solutions techniques ont été proposées, par exemple décrites dans les brevets DE 10 2008 035750, EP 1 900 962, EP 2 249 055, WO 2008/135876, WO 2008/136032.

Le Demandeur a voulu se différencier des technologies décrites dans ces documents et améliorer le contrôle de la dilatation relative entre le bol et la couronne à l'échauffement engendré en situation de fonctionnement du véhicule.

On connaît par ailleurs par le brevet FR 2 931 219 un rotor de frein à disque constitué par :
- un anneau de fixation comprenant un axe central de symétrie en rotation et une paroi cylindrique intérieure sur laquelle une ou plusieurs excroissances orientées vers l'axe central séparant des créneaux radiaux successifs en alternance.
- un bol comprenant une paroi cylindrique extérieure avec des pattes délimitant entre elles un créneau axial dans la paroi cylindrique extérieure, lesdites pattes étant agencées chacune pour pénétrer dans les créneaux radiaux successifs en s'appliquant contre ladite excroissance de façon à permettre à celle-ci de coulisser radialement dans le créneau axial. Plus spécifiquement, lesdites pattes ont des extrémités pliées de façon à s'appliquer contre l'excroissance considérée.

Cet aménagement spécifique exige la réalisation de pattes comme illustré dans les dessins du brevet précité avec des formes en crochets ou agrafes spécifiques et pliées en extrémités, avec donc une très grande fragilité et des risques de cassure. La fabrication est complexe, et exige différentes opérations de pliage. Les extrémités desdites pattes qui sont repliées restent fragiles par l'effet de charnière de liaison avec les pattes elles-mêmes. L'appui desdites extrémités de pattes reste très aléatoire sur l'excroissance, et de ce fait, le maintien de l'excroissance reste très incertain. Si dans son principe, le dispositif décrit permet que les excroissances formées puissent être guidées dans chacune des chambres constituées, la solidité de l'ensemble reste sujette à caution en égard des contraintes de dilatation et des sollicitations.

Le document US 2010/0084231 A1 montre un frein à disque d'après le préambule de la revendication 1.

La démarche du demandeur a donc été de reconsidérer la conception du frein à disque tout en répondant à la problématique de la dilatation relative entre le bol et la couronne.

Un autre but recherché selon l'invention était de maîtriser la position du bol par rapport à la couronne lors de l'opération de freinage.

La solution mise en œuvre par le Demandeur répond à ces objectifs dans le cadre d'une technologie d'assemblage très spécifique entre le bol de frein et la couronne, technologie qui apporte ainsi les avantages spécifiés pour la réalisation d'un frein à disque conforme aux caractéristiques de la revendication 1.

L'invention concerne également un procédé de fabrication et d'assemblage d'un frein à disque selon les caractéristiques de la revendication 5.

Selon une autre caractéristique de l'invention, l'assemblage du bol de frein avec la couronne est réalisé par sertissage-pressage.

Ces caractéristiques et d'autres encore ressortiront bien de la suite de la description.

Pour fixer l'objet de l'invention illustré d'une manière non limitative aux figures des dessins où :
La figure 1 est une vue en perspective de trois quart représentant le montage d'un disque de frein selon l'Art Antérieur constitué d'une couronne et d'un bol de frein,
La figure 2 est une vue illustrant à partir de la figure 1, en perspective, le bol de frein seul, avec en éclaté la patte de liaison et fixation,
La figure 3 est une vue en perspective du bol de frein seul selon une première mise en œuvre dans le cadre de la présente invention,
La figure 4 est une vue en perspective avant montage du frein à disque dans sa configuration selon l'invention, avec le bol de frein et la couronne,
La figure 5 est une vue du frein à disque selon l'invention, après assemblage du bol de frein et de la couronne après opération de sertissage,
La figure 6 est une vue en perspective du bol de frein seul après sertissage, le bol de frein étant représenté seul pour la compréhension de l'invention,
La figure 7 est une vue de dessus illustrant le disque de frein amovible avec ses composants mais avant l'opération de sertissage,
La figure 8 est une vue en coupe selon la ligne B-B de la figure 7,
La figure 9 est une vue en coupe axiale selon la ligne A-A de la figure 7,
La figure 10 est une vue en perspective du frein à disque représenté aux figures 7, 8 et 9 avant l'opération de sertissage,
La figure 11 est une vue de dessus illustrant le disque de frein assemblé avec ses composants après l'opération de sertissage,
La figure 12 est une vue en coupe selon la ligne C-C de la figure 11,
La figure 13 est une vue en coupe axiale selon la ligne D-D de la figure 11,
La figure 14 est une vue en perspective du frein à disque représenté aux figures 11, 12, 13 après l'opération de sertissage.
La figure 15 est une vue en perspective du bol de frein seul dans une seconde mise en œuvre selon l'invention,
La figure 16 est une vue en perspective de la couronne susceptible de recevoir le bol de frein selon la figure 15,
Les figures 17 et 18 illustrent le positionnement du bol de frein et de la couronne selon la seconde mise en œuvre avant et après sertissage.
La figure 19 illustre une troisième variante dans le profil des pattes formées sur le bol de frein et les doigts formés sur la couronne selon une configuration trapézoïdale. Sur cette figure, le bol de frein et représenté dans la position fermée de ses pattes,
La figure 20 est une vue à caractère schématique et en coupe illustrant l'assemblage du bol de frein sur la couronne dans la configuration des pattes et des doigts selon la figure 19,
La figure 21 est une vue en coupe selon la ligne E-E de la figure 20.

Afin de rendre plus concret l'objet de l'invention, on le décrit maintenant d'une manière non limitative illustrée aux figures des dessins.

Le frein à disque mis en œuvre selon son procédé d'assemblage selon l'invention est référencé dans son ensemble par (10). Il comprend une couronne (11) et son bol de frein (12).

Selon l'invention, la couronne (11) est constituée par au moins un ou par deux flasques (11a-11b) circulaires entretoisées par des plaques de liaison (11c) disposées radialement à espaces ou intervalles réguliers. La liaison des dits flasques est effectuée de toute manière appropriée. A l'intérieur de l'espace (e) formé par les flasques, on définit la zone d'insertion du bol de frein.

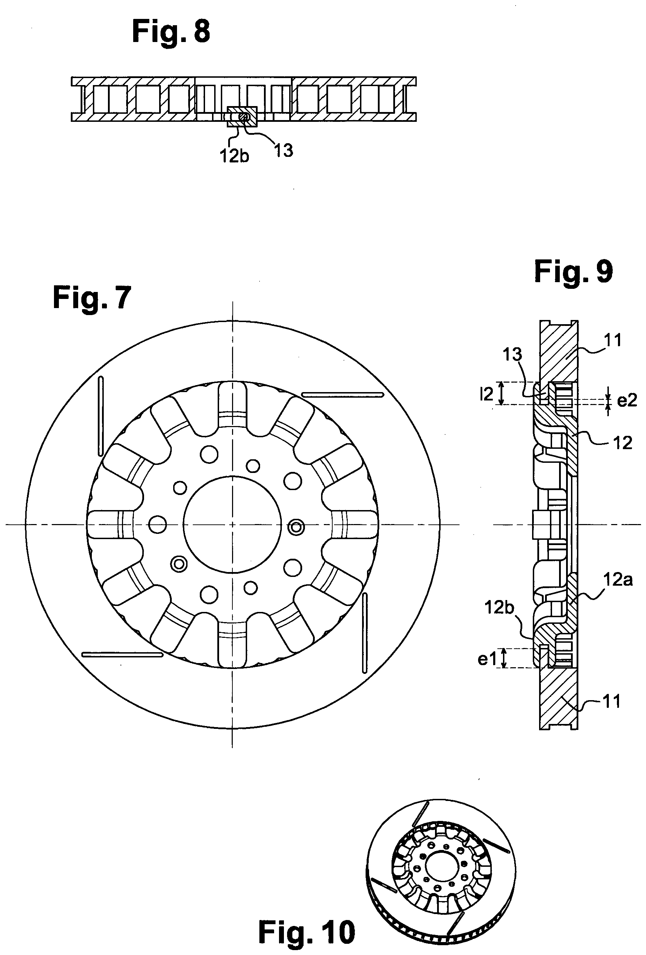

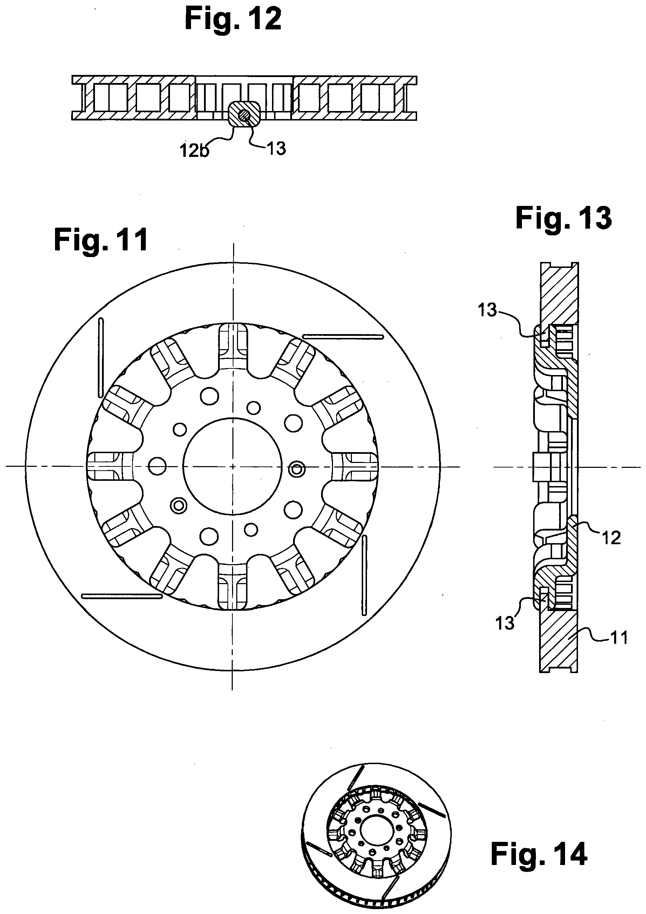

Selon la spécificité de la dite couronne, celle-ci comprend une pluralité de doigts (13) disposés radialement à intervalles réguliers et débouchant dans le dit espace central (e) récepteur du bol de frein. Ces doigts débordent extérieurement dans le volume intérieur de la couronne. Ils sont positionnés et fixés de toute manière appropriée, par soudure ou autrement sur certaines plaques de liaison (11c) et plus généralement à l'ossature de la couronne, et par exemple sur l'un des flasques comme illustré figures 8, 9, 12, 13, 16.

Le bol de frein (12) comprend de manière connue une base circulaire (12a) se prolongeant radialement et extérieurement par des pattes (12b).

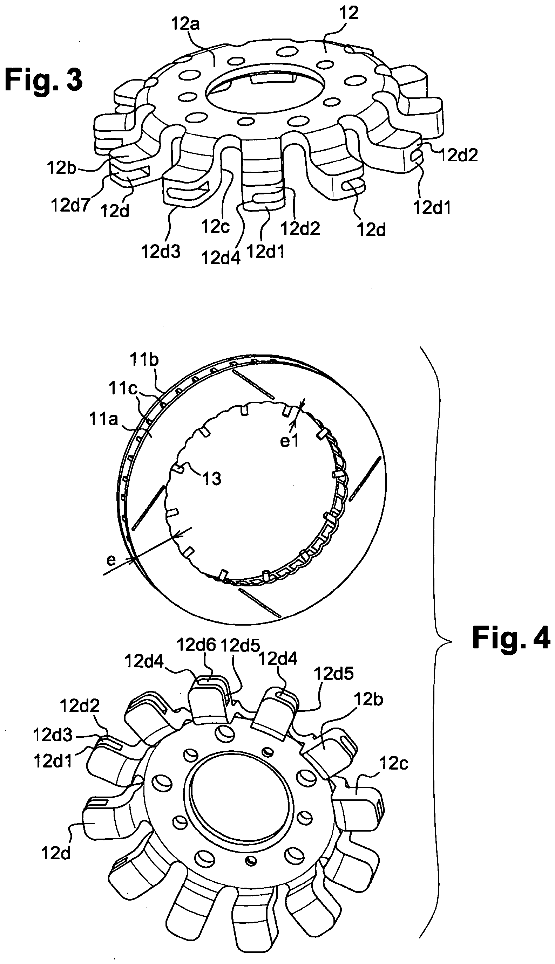

Selon l'invention, les pattes (12b) ont une configuration étagée (12c) avec en bout une forme en chape (12d) en définissant deux branches (12dl) (12d2) parallèles entre elles avec un espace (12d3) entre elles. Ces pattes (12b) ont ainsi une forme en 'U' fermée d'un côté par le fond (12d4) et ouvert à l'opposé (12d5). En outre, les dites pattes (12b) sont ouvertes à leur extrémité (12d6) frontale. Ainsi qu'illustré figure 3, les dites pattes (12b) sont toutes orientées dans le même sens avec leurs parties d'ouverture du même côté. Ainsi, selon l'invention, les dites pattes sont établies pour constituer dans leur épaisseur une zone de logement (12d7) réceptrice des doigts (13) disposés sur la couronne.

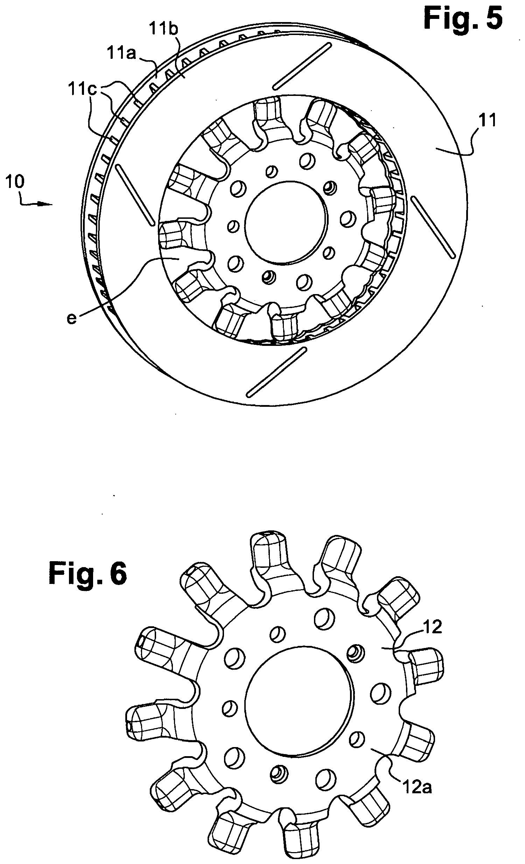

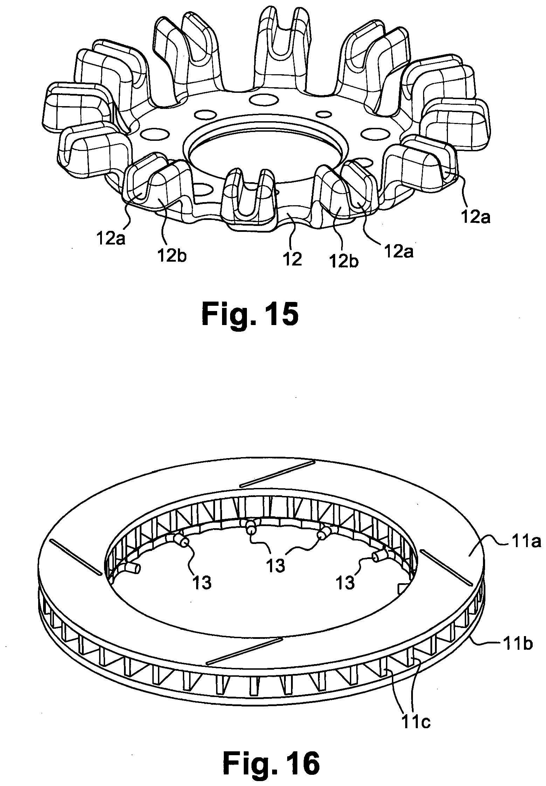

Deux mises en œuvre illustrées figures 3 à 14 et 15 à 18 représentent l'orientation des dites pattes et plus spécifiquement le positionnement de la zone d'ouverture (12d). Figures 3 à 14, les ouvertures sont orientées radialement dans l'épaisseur latérale du bol de frein. Figures 15 à 18, les ouvertures sont orientées côté face avant du bol de frein.

Le nombre de pattes (12b) et de doigts (13) est établi de manière à permettre un centrage du bol de frein (12) dans l'espace (e) de la couronne (11), les doigts (13) venant en regard des logements récepteurs (12d7) établis sur chacune des pattes (12b).

Dans le cas de la mise en œuvre des figures 3 à 14, le déplacement du bol de frein par rapport à la couronne s'effectue en introduisant le dit bol dans la cavité intérieure de la couronne puis à procéder à une rotation angulaire de quelques degrés du bol de frein (12) par rapport à la couronne, ou vice-versa, permettant de centrer les dits doigts (13) au fond des logements formés sur chacune des pattes (12b).

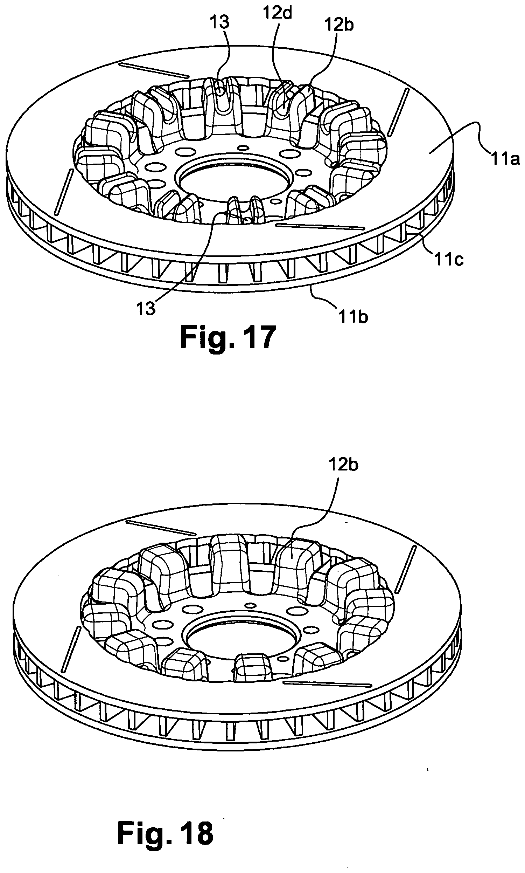

Dans la seconde mise en œuvre, des figures 15 à 18, le déplacement du bol de frein dans la couronne s'effectue en positionnant les doigts (13) dans le fond des formes en chape des dites pattes comme il apparaît notamment à la figure 17.

La liaison du bol de frein (12) par rapport à la couronne (11) s'effectue ensuite par une opération de déformation et de conformation sur chacune des pattes (12b) de manière à ce qu'elles présentent un logement fermé latéralement récepteur d'un doigt et ouvert frontalement pour autoriser l'absorption de la dilatation de la couronne et des doigts lors du fonctionnement du véhicule. Cette mise en œuvre est automatisée pour la totalité des pattes (12b) du bol de frein avec la couronne. De manière préférée, cette opération s'effectue par sertissage et pressage. Elle engendre une phase de fluage de la matière constituée des pattes autour des doigts (13) afin de fermer l'ouverture latérale qui permet exclusivement l'insertion des doigts (13) dans leur logement. La phase de fluage de la matière permet d'entourer chaque doigt, avec un contact sans effort important de compression autour du doigt, ce qui permet, à chaud, lors de la dilatation de la matière, de libérer les doigts et de faciliter la dilatation de la couronne. La géométrie de chaque logement est adaptée pour absorber la dilatation des doigts (13).

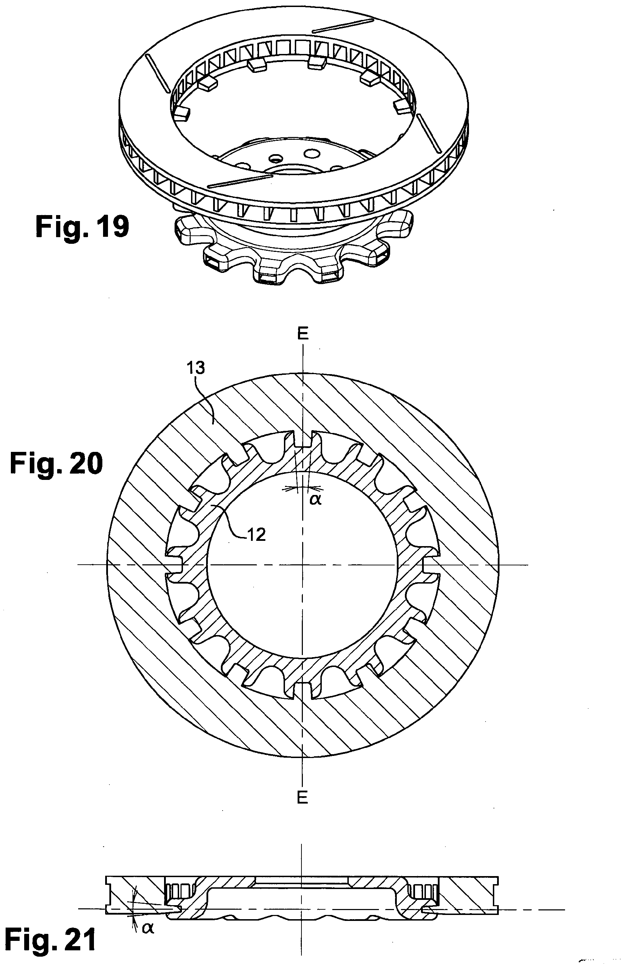

On a représenté aux figures 19, 20 et 21 une autre mise en œuvre possible dans la configuration des pattes (12) et des doigts (13). Les doigts (13) ont ainsi une configuration trapézoïdale (13b) avec des parties coniques tandis que la configuration des pattes (12) et également profilée de manière complémentaire avec une section trapézoïdale. On définit ainsi un angle de dépouille α qui facilite l'assemblage. Il y a lieu de noter que l'ouverture formée sur les pattes permettant l'insertion des doigts peut être réalisée soit latéralement comme c'est le cas des figures 3 à 14, soit sur la face avant comme c'est le cas des figures 15 à 18.

L'invention vise donc un procédé pour la conception d'un frein à disque à deux composants, une couronne et un bol de frein qui sont réalisés spécifiquement pour permettre leur assemblage, puis leur liaison après une opération de déformation des pattes, notamment par sertissage-pressage.

L'invention vise un procédé qui consiste à fabriquer d'une part une couronne pour frein à disque, la dite couronne comprenant une pluralité de doigts (13) disposés radialement et débordant intérieurement dans le volume de la couronne, et d'autre part, un bol de frein qui est agencé avec une pluralité de pattes en nombre égal à celui des doigts, les dites pattes étant disposées dans une configuration étagée avec en bout une forme en chape et définissant une forme en 'U', fermée d'un côté par le fond et ouverte à l'opposé pour autoriser l'insertion des doigts par déplacement angulaire de la couronne et du bol de frein l'un par rapport à l'autre, l'assemblage du bol de frein et de la couronne s'effectuant par une opération de sertissage-pressage en provoquant le fluage de la matière pour entourer les dits doigts dans des logements intérieurs tout en autorisant leur déplacement radial lors de la dilatation du bol de frein.

En d'autres termes, le bol de frein est monté sur la couronne dans une configuration flottante permettant d'absorber les effets d'allongement par dilatation dus à l'échauffement du frein à disque.

Selon une autre disposition importante de l'invention, les zones de butées constituées par la partie de fond de chaque forme en 'U' initiale des pattes sont orientées dans le sens du freinage du véhicule, de façon à maximiser la tenue de la liaison en fonction des efforts de freinage, les doigts (13) venant dans la dite partie de fond. On obtient ainsi une meilleure tenue mécanique du frein à disque qui permet de s'affranchir des risques de rupture ou de défaillance.

Les avantages ressortent bien de l'invention, on souligne le nouveau concept de fabrication et d'assemblage des constituants du frein à disque, sa capacité d'absorption des effets liés de dilatation dus à réchauffement et l'orientation des doigts dans la partie de logement la plus compacte.

La dilatation radiale de la couronne est permise pour le déplacement des doigts dans les logements formés sur le bol de frein et par la souplesse des pattes.

## Revendications

1. Frein à disque pour véhicule, du type comprenant un assemblage d'une couronne (11) et d'un bol de frein (12), la dite couronne étant constituée par au moins un flasque (11a-11b) circulaire, le ou les dits flasques définissant un espace intérieur (e) pour l'insertion du bol de frein, le dit bol de frein (12) comprenant une base circulaire (12a) se prolongeant radialement et extérieurement par des pattes (12b), la couronne (11) recevant une pluralité de doigts (13) débouchant extérieurement dans le volume intérieur de la couronne (11), les pattes étant agencées pour autoriser la réception desdits doigts, leur guidage radial et leur maintien pour permettre l'absorption de la dilatation de la couronne et des doigts par déplacement radial desdits doigts lors du fonctionnement du véhicule **caractérisé en ce que** les pattes (12b) ont une configuration étagée (12c) avec en bout une forme en chape (12d) définissant deux branches parallèles (12d1) (12d2) délimitant un espace (12d3) en forme de 'U' en définissant intérieurement un logement pour chacun des doigts (13) de la dite couronne, les pattes, en nombre égal au nombre de doigts(13), étant orientées dans le même sens avec leur partie d'ouverture du même côté, tandis que les zones de butée constituées par les parties de fond (12d4) de chaque forme en 'U' initiale des pattes sont orientées de façon à maximiser la tenue de la liaison en fonction des efforts de freinage, lesdites pattes étant fermées autour desdits doigts par déformation et fluage de la matière autour desdits doigts en leur laissant une capacité de déplacement radial.

2. Frein à disque selon la revendication 1, **caractérisé en ce que** les pattes (12b) ont une forme en 'U' dont l'ouverture est orientée radialement dans l'épaisseur latérale du bol de frein.

3. Frein à disque selon la revendication 1, **caractérisé en ce que** les pattes (12b) ont une forme en 'U' dont l'ouverture est orientée face avant du bol de frein,

4. Frein à disque selon la revendication 1, **caractérisé en ce que** les doigts (13) ont une configuration trapézoïdale et sont engagés dans les pattes (12) ayant une configuration complémentaires trapézoïdale avec un angle de dépouille α,

5. Procédé de fabrication et d'assemblage d'un frein à disque défini selon l'une quelconque des revendications 1 à 4, **caractérisé en ce qu'**il consiste à fabriquer d'une part une couronne pour frein à disque, la dite couronne comprenant une pluralité de doigts (13) disposés radialement et débordant intérieurement dans le volume de la couronne, et d'autre part, un bol de frein qui est agencé avec une pluralité de pattes (12b), en nombre égal à celui des doigts, les dites pattes étant disposées dans une configuration étagée avec en bout une forme en chape en définissant une ouverture d'accès selon une forme en 'U' pour autoriser l'insertion des doigts par déplacement de la couronne et du bol de frein l'un par rapport à l'autre, l'assemblage du bol de frein et de la couronne s'effectuant par une opération de déformation des dites pattes par sertissage pressage en provoquant le fluage de la matière pour entourer les dits doigts dans les logements intérieurs tout en autorisant leur déplacement radial lors de la dilatation du bol de frein.

6. Procédé selon la revendication 5, **caractérisé en ce que** l'on positionne le bol de frein (12) dans l'espace intérieur de la couronne (11), chaque patte (12b) étant en regard d'un doigt (13), on procède à une rotation angulaire de quelques degrés du bol de frein par rapport à la couronne (11) de manière à engager les dits doigts (13) dans les logements récepteurs formés sur chacune des pattes, et on procède à l'assemblage par une opération de sertissage-pressage des dites pattes autour des doigts tout en leur laissant une capacité de déplacement lors de la dilatation de la couronne.

7. Procédé selon la revendication 5, **caractérisé en ce que** l'on positionne le bol de frein (12) dans l'espace intérieur de la couronne (11), chaque patte (12b) étant en regard d'un doigt (13) en assurant son logement, et on procède à l'assemblage par une opération de sertissage-pressage des dites pattes autour des doigts tout en leur laissant une capacité de déplacement lors de la dilatation de la couronne.

## Patentansprüche

1. Scheibenbremse für Fahrzeuge, entsprechend dem Typ, der ein Bauteil aus Reibring (11) und Nabe (12) umfasst, wobei dieser Reibring aus mindestens einem kreisförmigen Flansch (11a-11b) besteht, wobei der oder die Flansch(e) dabei einen Innenraum (e) zum Einsetzen der Nabe definiert/definieren, wobei diese Nabe (12) eine kreisförmige Basis (12a) umfasst, die sich radial und nach außen durch Klauen (12b) fortsetzt, wobei der Reibring (11) eine Vielzahl von Stiften (13) aufnimmt, die außen im Innenraum des Reibrings (11) münden, wobei die Klauen so eingerichtet sind, dass es möglich wird, diese Stifte aufzunehmen, sie radial zu führen und sie zu halten, damit die Ausdehnung des Reibrings und der Stifte durch radiale Verschiebung dieser Stifte beim Betrieb des Fahrzeugs ermöglicht wird, **dadurch gekennzeichnet, dass** die Klauen (12b) eine abgestufte Konfiguration (12c) mit einer Gabelform (12d) am Ende haben, durch die zwei parallele Zweige (12dl) (12d2) definiert sind, die einen 'U'-förmigen Raum (12d3) begrenzen, und dabei innen eine Unterbringung für jeden einzelnen Stift (13) des genannten Reibrings bilden, wobei die Klauen, deren Anzahl der Anzahl der Stifte (13) entspricht, mit ihrem Öffnungsteil auf derselben Seite in dieselbe Richtung ausgerichtet sind, während die Anschlagszonen, die von den rückwärtigen Teilen (12d4) jeder ursprünglichen 'U'- Form der Klauen gebildet werden, in einer Art und Weise ausgerichtet sind, dass die Aufrechterhaltung der Verbindung entsprechend den Bremskräften maximiert wird, wobei sich diese Klauen um die genannten Stifte durch Verformung und Kriechen des Materials um diese Stifte herum schließen, wobei diese sich weiterhin radial verschieben können.

2. Scheibenbremse nach Anspruch 1, **dadurch gekennzeichnet, dass** die Klauen (12b) eine 'U'- Form haben, deren Öffnung radial, in der seitlichen Dicke der Nabe ausgerichtet ist.

3. Scheibenbremse nach Anspruch 1, **dadurch gekennzeichnet, dass** die Klauen (12b) eine 'U'- Form haben, deren Öffnung zur Vorderseite der Nabe orientiert ist.

4. Scheibenbremse nach Anspruch 1, **dadurch gekennzeichnet, dass** die Stifte (13) eine trapezförmige Konfiguration haben und in die Klauen (12) eingerastet sind, die eine entgegengesetzte trapezförmige Konfiguration mit einem Freiwinkel α haben.

5. Verfahren zur Herstellung eines Scheibenbremsen-Bauteils, der nach einem der vorangehenden Ansprüche 1 bis 4 definiert wird, **dadurch gekennzeichnet, dass** es darin besteht, erstens einen Reibring für Scheibenbremse, wobei dieser Reibring eine Vielzahl von Stiften (13) umfasst, die radial angeordnet sind und nach innen in den Raum des Reibrings hineinragen, und zweitens eine Nabe herzustellen, die mit einer Vielzahl von Klauen (12b) ausgerüstet ist, deren Zahl gleich der der Stifte ist, wobei diese Klauen in einer abgestuften Konfiguration mit einem Ende in Gabelform angeordnet sind, wodurch eine Zugangsöffnung in 'U'- Form definiert wird, damit die Stifte durch Verschiebung des Reibrings und der Nabe im Verhältnis zueinander eingeführt werden können, wobei der Zusammenbau der Nabe und des Reibrings durch eine Verformung dieser Klauen durch Crimpen und Pressen erfolgt, indem ein Kriechen des Materials veranlasst wird, um diese Stifte in den Innenaussparungen zu umgeben, dabei aber ihre radiale Verschiebung bei der Ausdehnung der Nabe zuzulassen.

6. Verfahren nach Anspruch 5, **dadurch gekennzeichnet, dass** die Nabe (12) in den Innenraum des Reibrings (11) eingesetzt wird, wobei sich jede Klaue (12b) gegenüber eines Stiftes (13) befindet, es eine Drehung der Nabe um einen Winkel von einige Grad, bezogen auf den Reibring (11) erfolgt, so dass die genannten Stifte (13) in die Aufnahmeaussparungen einrasten, die auf jeder Klaue gebildet sind, und es der Zusammenbau durch einen Crimp-Pressvorgang dieser Klauen um die Stifte herum erfolgt, wobei diese weiterhin eine Verschiebungskapazität bei der Ausdehnung des Reibrings haben.

7. Verfahren nach Anspruch 5, **dadurch gekennzeichnet, dass** die Nabe (12) in den Innenraum des Reibrings (11) eingesetzt wird, wobei sich jede Klaue (12b) gegenüber eines Stiftes (13) befindet, und dabei seine Unterbringung sicherstellt und es der Zusammenbau durch einen Crimp-Pressvorgang dieser Klauen um die Stifte herum erfolgt, wobei diese weiterhin eine Verschiebungskapazität bei der Ausdehnung des Reibrings haben.

## Claims

1. Vehicle disc brake, of a type incorporating an assembly of a crown (11) and a brake bowl (12), the said crown being composed of at least one circular flange (11a-11b),the said flange(s) establishing an internal space (e) for the insertion of the brake bowl, the said brake bowl (12) incorporating a circular base (12a) extended radially and externally by lugs (12b), the crown (11) accommodates a plurality of fingers (13) protruding externally into the interior volume of the crown (11), the lugs being arranged to allow the insertion of said fingers, their radial guiding and holding in order to allow the absorption of the expansion of the crown and the fingers by radial movement of said fingers during the operation of the vehicle ***characterized in that*** the lugs (12b) have a staged configuration (12c) with, at the end, a hood form (12d) establishing two branches (12dl) (12d2) parallel with each other, with a space (12d3) in 'U' form internally providing a housing for each of the fingers (13) of the said crown, the number of lugs being equal to the number of fingers (13), being oriented in the same direction, with their opening part on the same side, while the stop zones formed by the bottom parts (12d4) of each initial U form of the lugs are oriented to maximize the strength of the connection as a function of the braking stresses, said lugs being closed around said fingers by deformation and flow of the material around said fingers leaving them a radial displacement capacity.

2. Disk brake according to claim 1, ***characterized in that*** the lugs (12b) have a 'U' form of which the opening is oriented radially within the lateral thickness of the brake bowl.

3. Disc brake according to claim 1, ***characterized in that*** the lugs (12b) have a 'U' form of which the opening is oriented towards the front of the brake bowl.

4. Disc brake according to claim 1, ***characterized in that*** the fingers (13) have a trapezoidal configuration and are engaged in the lugs (12), which have a complementary trapezoidal configuration with a relief angle α.

5. A process of manufacturing and assembling a disc brake defined according to any of claims 1 to 4, ***characterized in that*** it consists in manufacturing, firstly, a disc brake crown, said crown comprising a plurality of fingers (13) arranged radially and protruding internally into the volume of the crown, and secondly, a brake bowl designed with a plurality of lugs (12b), in a quantity equaling the number of fingers, the said lugs being positioned in a staged configuration with, at the end, a hood shape by defining an access opening in a U form to allow the insertion of the fingers, by movement of the crown and the brake bowl in relation to each other, the assembly of the brake bowl and the crown being accomplished via a crimping/pressing operation causing the flowage of the material to surround the said fingers in the interior housings while allowing their radial movement during the expansion of the brake bowl.

6. Process according to claim 5, ***characterized in that*** the brake bowl (12) is positioned in the inner space of the crown (11), each lug (12b) facing a finger (13), and an angular rotation of a few degrees of the bowl with respect to the crown (11) is carried out in order to engage said fingers (13) in the receiving housings formed on each of the lugs, and the assembly is carried out by a crimping and pressing operation of the said lugs around the fingers while leaving them with a displacement capacity when the crown expands.

7. Process according to claim 5, ***characterized in that*** the brake bowl (12) is positioned in the inner space of the crown (11), each tab (12b) facing a finger (13) and accommodating it, and the assembly is carried out by a crimping and pressing operation of said lugs around the fingers while leaving them with a displacement capacity during the expansion of the crown.
